# EUROPÄISCHE PATENTSCHRIFT

(11) **EP 3 740 777 B1**
(45) Veröffentlichungstag und Bekanntmachung des Hinweises auf die Patenterteilung: **28.06.2023**
(21) Anmeldenummer: 18804291.5
(22) Anmeldetag: 15.11.2018
(51) Int. Cl.: G01S 13/931, G01S 7/02, G01S 7/35

(54) **VERFAHREN UND VORRICHTUNG ZUM KORRIGIEREN EINES RADARSIGNALS UND RADARVORRICHTUNG**
METHOD AND DEVICE FOR CORRECTING A RADAR SIGNAL, AND RADAR DEVICE
PROCÉDÉ ET DISPOSITIF DE CORRECTION D'UN SIGNAL RADAR ET DISPOSITIF RADAR

(30) Priorität: 18.01.2018 DE 102018200753
(43) Veröffentlichungstag der Anmeldung: 25.11.2020
(73) Patentinhaber: Robert Bosch GmbH, 70442 Stuttgart (DE)
(72) Erfinder: KIRSCH, Andreas, 71229 Leonberg (DE); HEILMANN, Stefan, 71665 Vaihingen/Enz (DE); SCHOOR, Michael, 70195 Stuttgart (DE); ENGEWALD, Stefan, 74706 Osterburken (DE)
(86) Internationale Anmeldenummer: PCT/EP2018/081483
(87) Internationale Veröffentlichungsnummer: WO 2019/141408

(56) Entgegenhaltungen:
- EP-A1- 0 954 755
- EP-A1- 3 173 812
- JP-A- 2009 139 321

## Beschreibung

Die vorliegende Erfindung betrifft ein Verfahren zum Korrigieren eines Radarsignals, eine Vorrichtung zum Korrigieren eines Radarsignals und eine Radarvorrichtung.

### Stand der Technik

Zur Unterstützung des Fahrers sowie zur Implementierung autonomen Fahrens wird zunehmend auf Radarsensoren zurückgegriffen. Hierbei handelt es sich üblicherweise um Dauerstrichradarsysteme, welche im 76 Gigahertz-Band betrieben werden. Besonders verbreitet ist die FMCW-Modulation (frequency modulated continuous wave) und deren Weiterentwicklungen und Abwandlungen. Hierbei wird die Frequenz der ausgesendeten Radarwellen periodisch moduliert. Der Durchgang von der tiefsten Frequenz bis zur höchsten Frequenz wird als Signalfolge bzw. Burst bezeichnet. Neben dem Frequenzhub, d. h. der Differenz zwischen der tiefsten und der höchsten Frequenz einer jeweiligen FMCW-Rampe, ist das Radarsystem durch die Steigerung der Frequenz gekennzeichnet, welche jedoch durch die Bandbreite des Empfängers begrenzt ist. Aus der EP 0954755 B1 ist eine Radarvorrichtung zur Verwendung mit frequenzgewobbelten Sendersignalen bekannt. Die JP 2009139321 A betrifft eine Radarvorrichtung zur Verwendung mit FMCW-Modulation.

EP3173812 zeigt ebenfalls ein Verfahren zur Störunterdrückung, bei dem Objektpeaks im Spektrum des Radarsignals detektiert werden und die übrigen Bereiche des Spektrums gelöscht werden, wodurch ein Reparatursignal durch Rücktransformation in den Zeitbereich gebildet wird. Interferenzbehaftete Zeitbereiche des urspünglichen Radarsignals werden durch korrespondierende Abschnitte des Reparatursignals ersetzt.

Je mehr Fahrzeuge sich auf der Straße befinden, welche über Radarsensoren verfügen, desto höher ist die Gefahr von unerwünschten Quereinflüssen und von Interferenzeffekten. Bei Interferenzen ist die Steigung der eigenen FMCW-Rampe im allgemeinen Fall nicht identisch mit der Steigung einer störenden FMCW-Rampe. Somit ergibt sich im Basisband ein Chirp-Signal, dessen Frequenz von der negativen höchsten Basisbandfrequenz zur positiven höchsten Basisbandfrequenz kontinuierlich ansteigt oder umgekehrt. Der entsprechende Zeitraum ist durch die Unterschiede in der Steigung der jeweiligen Rampe sowie durch die Abtastrate definiert.

Von besonderer Bedeutung ist die Dauer der Interferenz, da beim Entfernen von Zeitbereichen aus dem Radarsignal umso stärkere Artefakte auftreten, je länger der Zeitbereich ist.

### Offenbarung der Erfindung

Die Erfindung stellt ein Verfahren zum Korrigieren eines Radarsignals mit den Merkmalen des Patentanspruchs 1, eine Vorrichtung zum Korrigieren eines Radarsignals mit den Merkmalen des Patentanspruchs 4 und eine Radarvorrichtung mit den Merkmalen des Patentanspruchs 5 bereit.

Gemäß einem ersten Aspekt betrifft Erfindung demnach ein Verfahren zum Korrigieren eines gestörten Radarsignals, wobei Hauptpeaks im Spektrum des Radarsignals ermittelt werden. Ein Hilfssignal wird durch Entfernen der Anteile der Hauptpeaks im Radarsignal ermittelt. Störbereiche des Radarsignals werden unter Verwendung des Hilfssignals erkannt. Ein korrigiertes Radarsignal wird durch Interpolieren des Radarsignals in den erkannten Störbereichen des Radarsignals unter Verwendung der ermittelten Hauptpeaks erzeugt.

Gemäß einem zweiten Aspekt betrifft die Erfindung demnach eine Vorrichtung zum Korrigieren eines gestörten Radarsignals, mit einer Schnittstelle, welche ein Radarsignal empfängt. Die Vorrichtung umfasst weiter eine Recheneinrichtung, welche mit der Schnittstelle gekoppelt ist und Hauptpeaks im Spektrum des Radarsignals ermittelt, ein Hilfssignal durch Entfernen der Anteile der Hauptpeaks im Radarsignal ermittelt, Störbereiche des Radarsignals unter Verwendung des Hilfssignals erkennt, und ein korrigiertes Radarsignal erzeugt, indem die Recheneinrichtung das Radarsignal in den erkannten Störbereichen des Radarsignals unter Verwendung der ermittelten Hauptpeaks interpoliert.

Gemäß einem zweiten Aspekt betrifft die Erfindung eine Radarvorrichtung mit einer Sendeempfängereinrichtung, welche Radarwellen aussendet und Reflexionen der Radarwellen empfängt und anhand der empfangenen Reflexionen ein Radarsignal ausgibt. Die Radarvorrichtung umfasst weiter eine Vorrichtung zum Korrigieren des ausgegebenen Radarsignals.

Gemäß einem zweiten Aspekt betrifft die Erfindung eine Radarvorrichtung mit einer Sendeempfängereinrichtung, welche Radarwellen aussendet und Reflexionen der Radarwellen empfängt und anhand der empfangenen Reflexionen ein Radarsignal ausgibt. Die Radarvorrichtung umfasst weiter eine Vorrichtung zum Korrigieren des ausgegebenen Radarsignals.

Bevorzugte Ausführungsformen sind Gegenstand der jeweiligen Unteransprüche.

### Vorteile der Erfindung

Erfindungsgemäß werden Störbereiche identifiziert und das Radarsignal in diesen Bereichen korrigiert. Das Radarsignal wird in den Störbereichen jedoch nicht auf null gesetzt oder linear interpoliert, was zu starken Artefakten führen würde, welche mit zunehmender Größe der Störbereiche anwachsen würden. Vielmehr wird eine Interpolation anhand der ermittelten Hauptpeaks durchgeführt. Dies erlaubt es, das Radarsignal in den durch die Interferenz hervorgerufenen Störbereichen durch im Wesentlichen glatte Verläufe fortzuführen. Da das interpolierte Radarsignal in den Störbereichen nun den Hauptpeaks entspricht, welche im Allgemeinen Objekten in der Umgebung des Radars zuzuordnen sind, können zusätzliche Artefakte vermieden werden. Besonders vorteilhaft ist hierbei, dass die Interpolation nur wenig von der Größe des Störbereichs selbst abhängt. Selbst bei langanhaltenden Interferenzen, welche sich über eine Vielzahl von Samples erstrecken, kann durch die Korrektur des Radarsignals ein störungsfreier Betrieb des Radars gewährleistet werden. Das Spektralrauschen wird verringert und die Erkennung von Zielen wird verbessert.

Für den Zweck dieser Erfindung wird unter Radarsignal ein zeitlicher Amplitudenverlauf verstanden, wobei durch Fouriertransformation des Radarsignals das Spektrum des Radarsignals erhalten wird.

Gemäß einer bevorzugten Weiterbildung des Verfahrens werden die Hauptpeaks mittels eines Peakdetektionsalgorithmus ermittelt. Beispielsweise kann der CFAR-Algorithmus eingesetzt werden.

Gemäß einer Weiterbildung des Verfahrens wird durch inverse Fouriertransformation der Anteile der Hauptpeaks im Spektrum des Radarsignals ein Hauptsignal berechnet, wobei das Hilfssignal durch Subtraktion des Hauptsignals im Radarsignal berechnet wird. Die Hauptpeaks werden gemäß dieser Ausführungsform im Zeitbereich entfernt.

Erfindungsgemäß
wird ein Differenzsignal ermittelt, indem die Anteile der Hauptpeaks im Spektrum des Radarsignals entfernt werden, und wobei das Hilfssignal durch inverse Fouriertransformation des Differenzsignals ermittelt wird. Gemäß dieser Ausführungsform werden die Hauptpeaks im Frequenzbereich entfernt.

Gemäß einer bevorzugten Weiterbildung des Verfahrens wird ein Anfangszeitpunkt oder ein Endzeitpunkt mindestens eines der Störbereiche erkannt, falls eine zeitliche Änderung einer Amplitude des Hilfssignals einen vorgegebenen Schwellenwert über- bzw. unterschreitet.

Gemäß einer bevorzugten Weiterbildung des Verfahrens wird ein Störbereich als der kleinste Zeitbereich ermittelt, innerhalb welchem sämtliche Zeitpunkte liegen, zu welchen eine Amplitude des Hilfssignals einen vorgegebenen Schwellenwert überschreitet.

Erfindungsgemäß umfasst das Erzeugen des korrigierten Radarsignals das Erzeugen eines Hauptsignals durch inverse Fouriertransformation der Hauptpeaks und das Interpolieren des Radarsignals in den erkannten Störbereichen mittels des Hauptsignals.

Gemäß einer bevorzugten Weiterbildung des Verfahrens umfasst das Erzeugen des korrigierten Radarsignals die inverse Fouriertransformation des Spektrums des Radarsignals zum Rückgewinnen des Radarsignals und das Interpolieren des rückgewonnenen Radarsignals in den erkannten Störbereichen des Radarsignals unter Verwendung der ermittelten Hauptpeaks. Gemäß dieser Ausführungsform kann auf das Speichern des ursprünglichen Radarsignals verzichtet werden. Zur Zwischenverarbeitung, d. h. zum Erkennen der Hauptpeaks sowie zur Berechnung des Hilfssignals, ist lediglich das Spektrum des Radarsignals erforderlich, d. h. das fouriertransformierte Radarsignal bzw. Radarsignal im Frequenzbereich. Zur Rückgewinnung des ursprünglichen Radarsignals wird das fouriertransformierte Radarsignal rücktransformiert. Dadurch muss zu jedem Zeitpunkt entweder das Radarsignal oder das fouriertransformierte Radarsignal gespeichert werden, jedoch nicht beide Signale, wodurch Speicherplatz eingespart werden kann.

### Kurze Beschreibung der Zeichnungen

Es zeigen:
- Figur 1: ein schematisches Blockschaltbild einer Vorrichtung zum Korrigieren eines Radarsignals gemäß einer Ausführungsform der Erfindung;
- Figur 2: ein beispielhafter Verlauf eines ersten Radarsignals;
- Figur 3: ein beispielhafter Amplitudenverlauf des ersten Radarsignals im Frequenzbereich mit und ohne Interferenz;
- Figur 4: eine Illustration einer Korrektur des ersten Radarsignals mittels Nullen;
- Figur 5: ein beispielhafter Amplitudenverlauf des ersten Radarsignals im Frequenzbereich mit und ohne Korrektur mittels Nullen;
- Figur 6: ein beispielhafter Verlauf eines zweiten Radarsignals;
- Figur 7: ein beispielhafter Amplitudenverlauf des zweiten Radarsignals im Frequenzbereich mit und ohne Interferenz;
- Figur 8: eine Illustration einer Korrektur des zweiten Radarsignals mittels Nullen;
- Figur 9: ein beispielhafter Amplitudenverlauf des zweiten Radarsignals im Frequenzbereich mit und ohne Korrektur mittels Nullen;
- Figur 10: ein beispielhafter Verlauf eines Hilfssignals;
- Figur 11: eine Illustration einer Korrektur des zweiten Radarsignals mittels Interpolation;
- Figur 12: ein beispielhafter Amplitudenverlauf des zweiten Radarsignals im Frequenzbereich mit und ohne Korrektur mittels Interpolation;
- Figur 13: ein schematisches Blockschaltbild einer Radarvorrichtung gemäß einer Ausführungsform der Erfindung;
- Figur 14: ein Flussdiagramm eines Verfahrens zum Korrigieren eines Radarsignals gemäß einer ersten Ausführungsform der Erfindung;
- Figur 15: ein Flussdiagramm eines Verfahrens zum Korrigieren eines Radarsignals gemäß einer zweiten Ausführungsform der Erfindung; und
- Figur 16: ein Flussdiagramm eines Verfahrens zum Korrigieren eines Radarsignals gemäß einer dritten Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

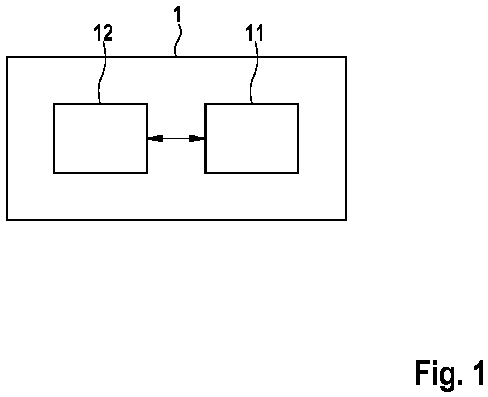

Figur 1 zeigt ein schematisches Blockschaltbild einer Vorrichtung 1 gemäß einer Ausführungsform der Erfindung. Die Vorrichtung 1 umfasst eine Schnittstelle 11, welche dazu ausgebildet ist, über eine Kabelverbindung oder eine kabellose Verbindung ein Radarsignal zu empfangen. Die Vorrichtung 1 kann in eine Radarvorrichtung integriert sein, welche beispielsweise in einem Fahrzeug angeordnet ist. Die Vorrichtung 1 kann jedoch auch von der Radarvorrichtung räumlich getrennt sein, etwa in einem Server außerhalb des Fahrzeugs vorgesehen sein, und dazu ausgebildet sein, die Radardaten einer Vielzahl von Radarvorrichtungen auszuwerten. Die Vorrichtung 1 kann die korrigierten Radarsignale an die Radarvorrichtung über die Schnittstelle 11 zurückübertragen.

Die Vorrichtung 1 weist ferner eine Recheneinrichtung 12 auf, welche einen oder mehrere Mikroprozessoren umfasst, welche zur Verarbeitung des Radarsignals ausgebildet sind. Die Recheneinrichtung 12 ist dazu ausgebildet, das empfangene Radarsignal, welches im Zeitbereich dargestellt ist, mittels Fouriertransformation in den Frequenzbereich zu transformieren und dadurch das Spektrum des Radarsignals zu berechnen. Die Recheneinrichtung 12 ermittelt Hauptpeaks im Spektrum des Radarsignals. Unter Hauptpeaks sind derartige Peaks bzw. Signalspitzen im Spektrum des Radarsignals zu verstehen, welche aufgrund ihrer Größe im Allgemeinen nicht von Rauschen oder Störeinflüssen stammen, sondern vielmehr Objekten im Umfeld der Radarvorrichtung zuzuordnen sind. Die Erkennung der Hauptpeaks kann mittels bekannter Peakdetektionsalgorithmen durchgeführt werden. Insbesondere können diejenigen Peaks als Hauptpeaks erkannt werden, deren Amplitude bzw. Signalleistung über einem vorgegebenen Schwellenwert liegt. Zur Erkennung der Hauptpeaks kann auch die Steigung der jeweiligen Peaks berücksichtigt werden.

Die Recheneinrichtung 12 ist dazu ausgebildet, die Anteile der Hauptpeaks aus dem Radarsignal zu entfernen. Die Recheneinrichtung 12 setzt dazu die Anteile der Hauptpeaks im Frequenzbereich zu null, d. h. vom fouriertransformierten Radarsignal, um ein Differenzsignal zu erzeugen. Das mittels inverser Fouriertransformation rücktransformierte Differenzsignal entspricht dem Radarsignal im Zeitbereich ohne Hauptpeaks.

Die Recheneinrichtung 12 kann jedoch auch dazu ausgebildet sein, die Anteile des Hauptpeaks zuerst mittels inverser Fouriertransformation in den Zeitbereich zu transformieren und dadurch ein Hauptsignal zu erzeugen, welches denjenigen Anteil des Radarsignals darstellt, welcher ausschließlich von den Hauptpeaks herrührt. Das Hauptsignal wird anschließend von dem Radarsignal abgezogen, um das Hilfssignal zu ermitteln, wobei lediglich die Rauschbeiträge sowie die Beiträge von unerwünschten Interferenzen im Hilfssignal verbleiben.

Die Recheneinrichtung 12 wertet das Hilfssignal 5 aus, indem Störbereiche erkannt werden. Unter Störbereichen sind derartige zeitliche Abschnitte im Hilfssignal bzw. im Radarsignal zu verstehen, welche auf unerwünschte Interferenzen mit anderen Radarsignalen zurückzuführen sind. Zur Ermittlung eines Störbereichs analysiert die Recheneinrichtung 12 den Absolutbetrag oder die Änderung der Amplitude des Hilfssignals und erkennt den Störbereichs, falls der Absolutbetrag oder die Änderung der Amplitude einen vorgegebenen Schwellenwert überschreitet.

Die Recheneinrichtung 12 erzeugt ein korrigiertes Radarsignal, indem das Radarsignal in Störbereichen korrigiert wird. Hierzu werden die Störbereiche ausgeschnitten und durch ein interpoliertes Signal ersetzt. Das interpolierte Signal wird anhand des Hauptsignals bestimmt, d. h. anhand der Anteile der Hauptpeaks im Radarsignal. Beispielsweise kann für jeden Störbereich das Radarsignal durch den entsprechenden Bereich im Hauptsignal ersetzt werden. Der Störbereich wird dadurch um den Beitrag der Interferenz sowie gegebenenfalls um zusätzliche Rauschbeiträge bereinigt. Da die Hauptpeaks bei Abwesenheit von Interferenzen den größten Anteil am Radarsignal aufweisen, wird das interpolierte Signal an den Rändern der Störbereiche im Wesentlichen stetig verlaufen. Gemäß weiteren Ausführungsformen kann das interpolierte Signal derart transformiert werden, dass ein stetiger Übergang an den Rändern der Störbereiche gewährleistet wird.

Das korrigierte Radarsignal 3 kann über die Schnittstelle 11 ausgegeben werden und von weiteren Vorrichtungen ausgewertet werden.

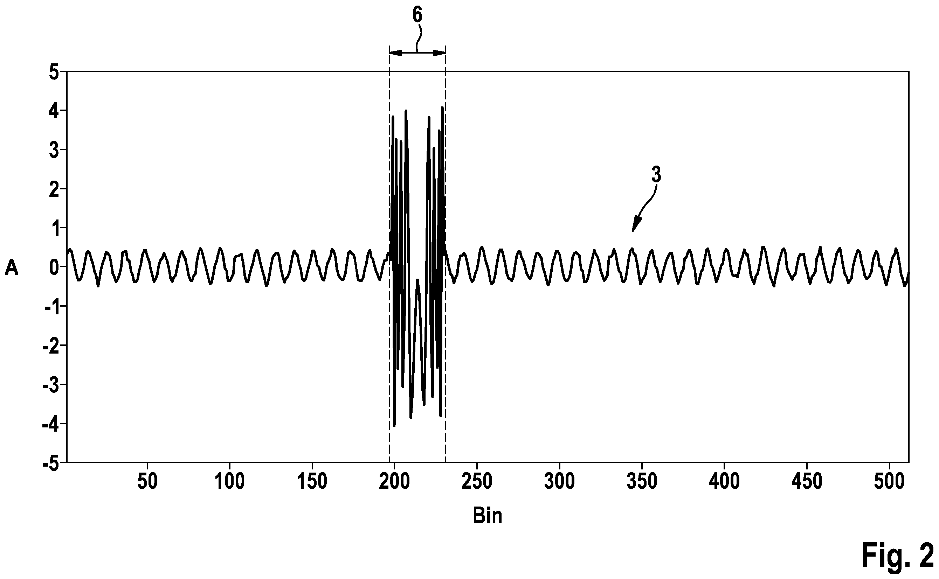

Einzelne Aspekte der Erfindung sollen anhand der nachfolgenden Figuren genauer erläutert werden. So zeigt Figur 2 ein beispielhaftes Radarsignal 3. Die Amplitude A ist als Funktion der Zeit aufgetragen, wobei die Amplitudenwerte für die einzelnen Bins angezeigt werden. Das Radarsignal 3 stammt von relativ schwachen Zielen, welche jeweils einen sinusförmigen Beitrag zum Radarsignal 3 liefern. In einem Störbereich 6 überlagern sich starke Interferenzsignale, wobei im gezeigten Beispiel die Amplitudenwerte aufgrund der Interferenzeffekte die Amplitudenwerte des Radarsignals 3 ohne Störung deutlich übertreffen.

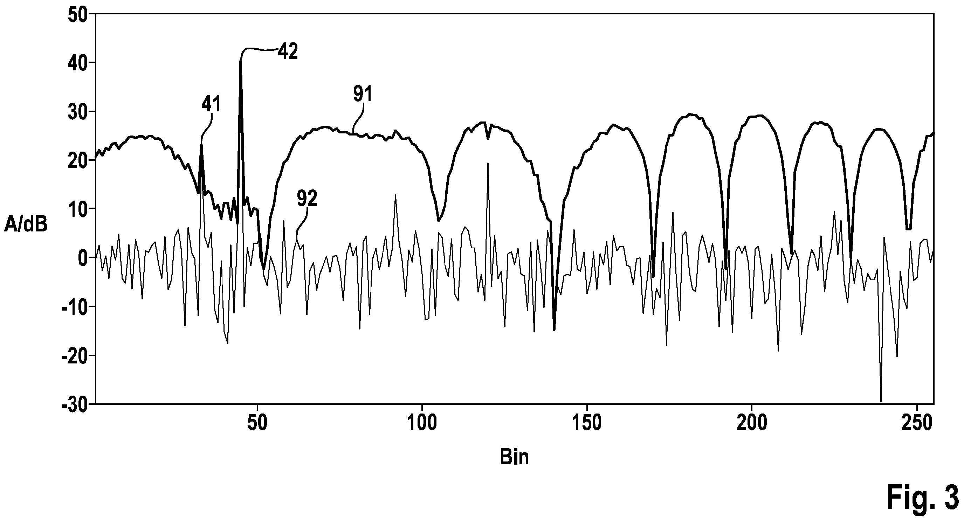

In Figur 3 ist das fouriertransformierte Radarsignal 3, d. h. das Spektrum des Radarsignals 3 illustriert. Das Spektrum 91 mit Interferenzen wird mit dem Spektrum 92 in Abwesenheit von Interferenzen verglichen. Wie zu sehen ist, heben die Interferenzeffekte das Rauschniveau um etwa 20 Dezibel an.

Die Recheneinrichtung 12 ermittelt die Positionen der Hauptpeaks 41, 42 und ermittelt anhand der oben beschriebenen Verfahren die Position des Störbereichs 6.

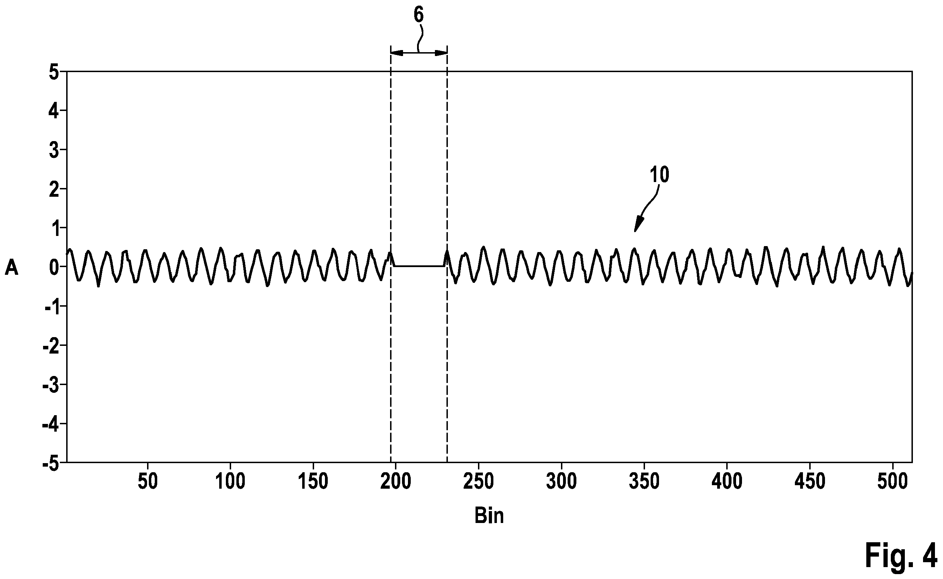

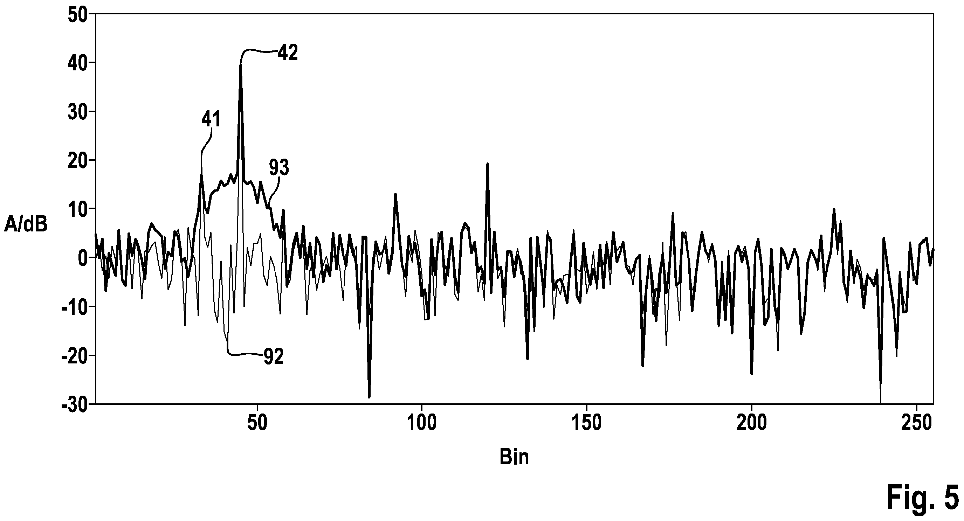

In Figur 4 ist ein beispielhaftes korrigiertes Radarsignal 10 illustriert, welches man erhalten würde, falls das Radarsignal 3 im Störbereich 6 durch sogenanntes "Nullen" korrigiert werden würde, d. h. durch Ersetzen der Signalwerte innerhalb des Störbereichs 6 mit dem Wert Null. Dadurch ergäbe sich das in Figur 5 gezeigte Spektrum 93 des korrigierten Radarsignals 10, welches mit dem Spektrum 92 des Radarsignals 3 in Abwesenheit von Interferenzen verglichen wird. Wie zu sehen ist, kann durch Nullen das Rauschniveau gesenkt werden, es entstehen jedoch starke Artefakte im Bereich der Hauptpeaks 41, 42. Erfindungsgemäß wird daher der Störbereich 6 nicht durch Nullen sondern anhand des Hauptsignals interpoliert.

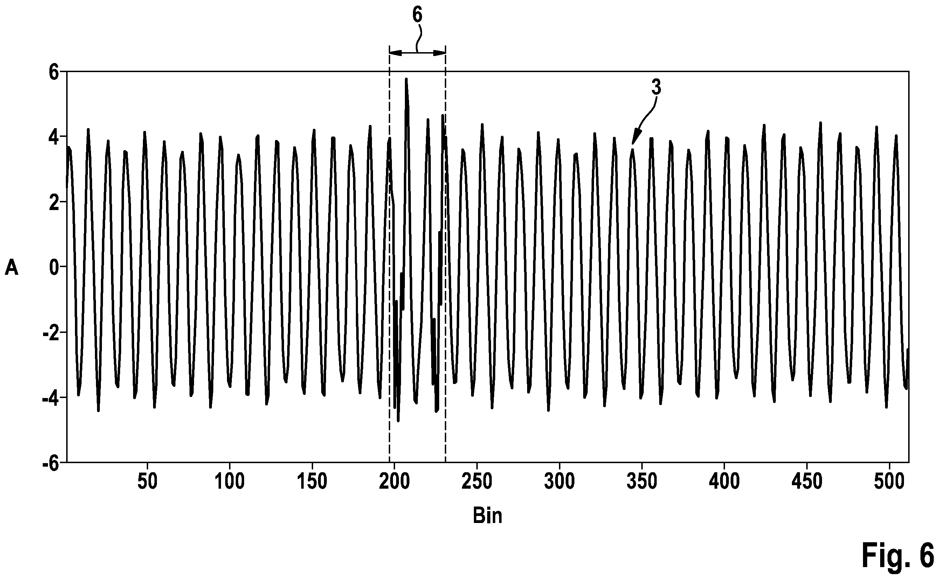

Dies soll für ein weiteres beispielhaftes Radarsignal 3 anhand der Figuren 6 bis 12 genau erläutert werden. So zeigt Figur 6 das Radarsignal 3, wobei wiederum in einem Störbereich 6 Interferenzen auftreten. Im Gegensatz zu dem in Figur 2 illustrierten Radarsignal 3 ist die Interferenz anhand des Radarsignals 3 weniger leicht zu erkennen, da die Amplitude der Störung deutlich geringer ausfällt.

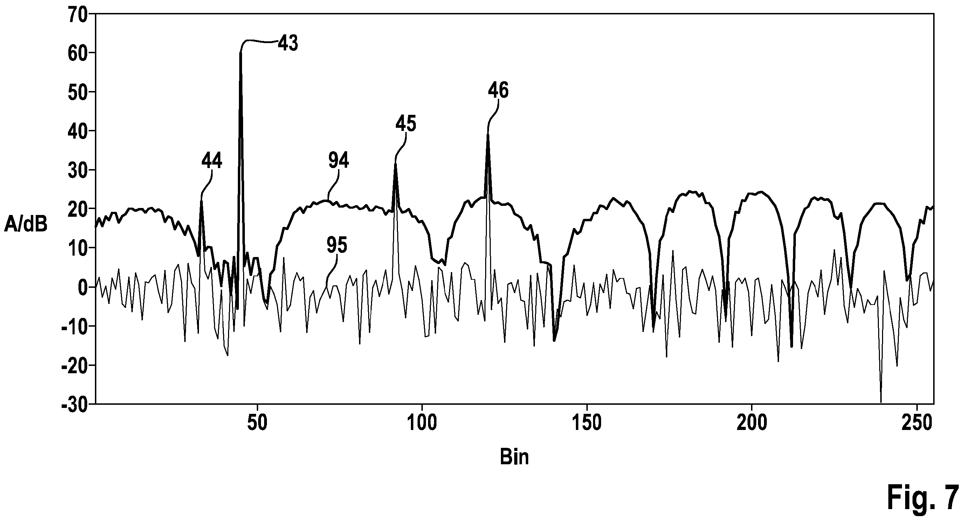

In Figur 7 sind das Spektrum 94 des Radarsignals 3 mit den Interferenzen im Störbereich 6, sowie ein entsprechendes Spektrum 95 des Radarsignals 3 in Abwesenheit von Interferenzen illustriert. Im Spektrum sind ein Hauptpeak 43 einer starken Quelle sowie drei weitere Hauptpeaks 44 bis 46 von etwas schwächeren Quellen zu erkennen.

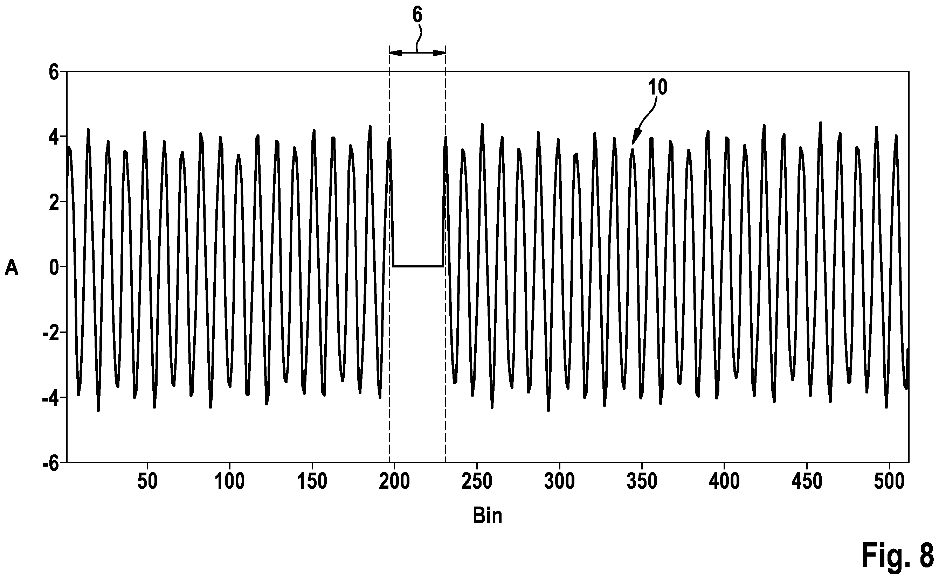

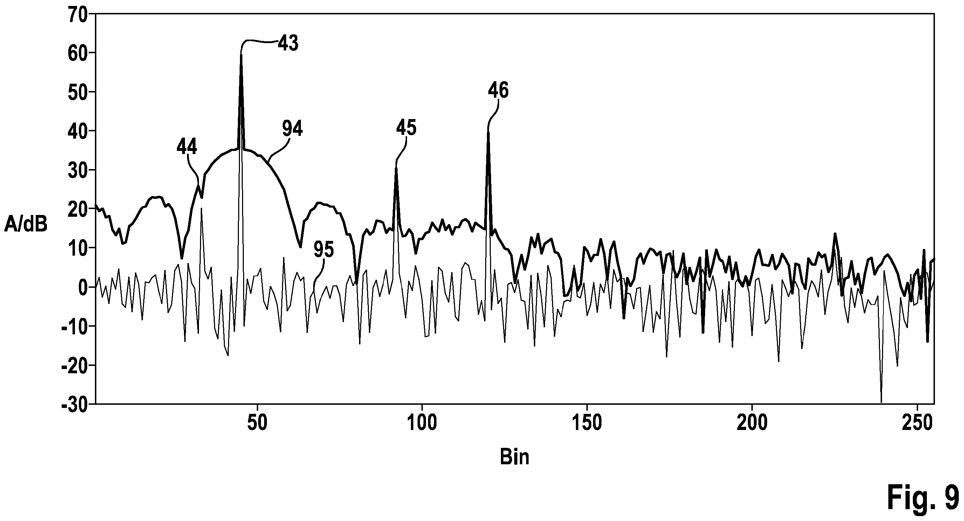

Beim Nullen ergäbe sich das in Figur 8 gezeigte korrigierte Radarsignal 10, sowie der in Figur 9 gezeigte Verlauf des Spektrums 94 des korrigierten Radarsignals 10, welcher im Vergleich mit einem Spektrum 95 des Radarsignals 3 ohne Interferenzen aufgetragen ist. Wiederum sind deutliche Artefakte im Bereich um die Hauptpeaks 43 bis 46 herum zu erkennen.

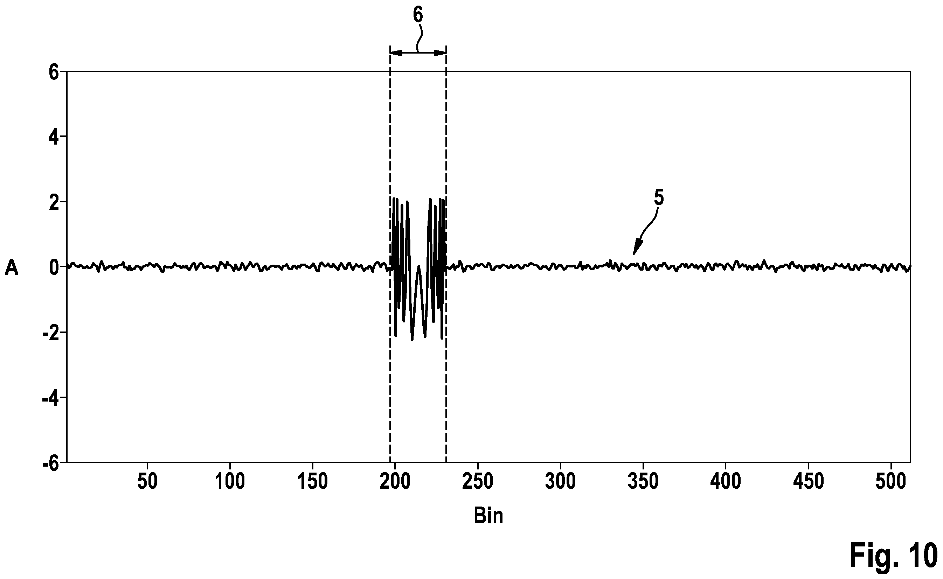

Gemäß der Erfindung wird das Radarsignal 3 daher nicht durch Nullen korrigiert, sondern vielmehr durch Interpolation. Hierzu ermittelt die Recheneinrichtung 12 die genauen Frequenzen der Hauptpeaks 43 bis 46 und berechnet durch Fouriertransformation ein entsprechendes Hauptsignal. Wird das Hauptsignal von dem Radarsignal 3 subtrahiert, ergibt sich im Zeitbereich ein in Figur 10 gezeigtes Hilfssignal 5, welches lediglich die Anteile von Rauschen und die Anteile der Interferenzen beinhaltet. Die Interferenzanteile sind üblicherweise deutlich stärker ausgeprägt als die Rauschanteile.

Anhand eines Schwellenwertes für den Wert der Amplitude oder anhand des Anstiegs der Amplitude kann die Recheneinrichtung 12 den Störbereich 6 ermitteln. Beispielsweise kann die Recheneinrichtung 12 erkennen, dass die Amplitude A einen vorgegebenen Schwellenwert überschreitet. Dadurch können die Randpunkte der Störbereiche 6 erkannt werden. Der Störbereich 6 kann beispielsweise als derjenige Bereich erkannt werden, innerhalb welchem sämtliche Zeitpunkte liegen, zu welchen die Amplitude A des Hilfssignals 5 den Schwellenwert überschreitet.

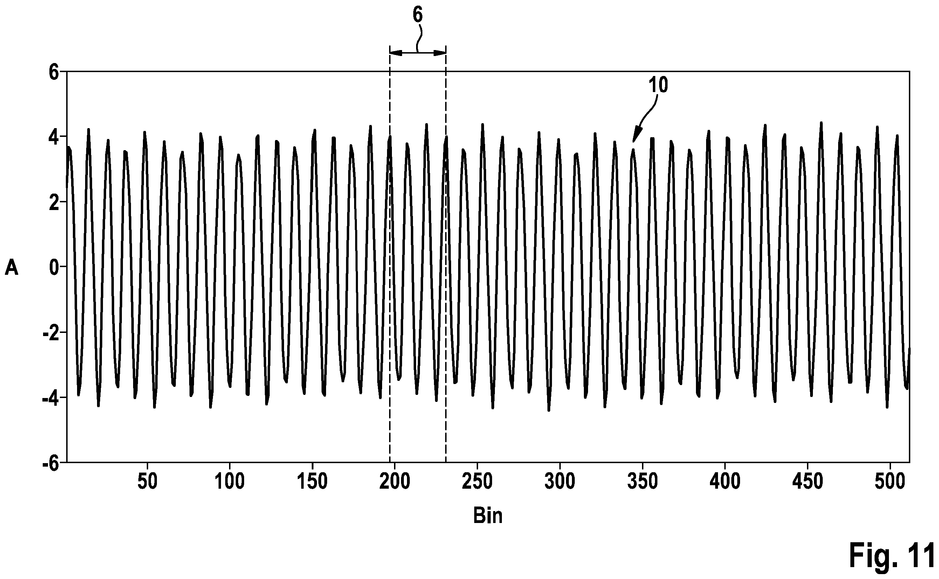

Die Recheneinrichtung 12 interpoliert das Radarsignal 3 in dem ermittelten Störbereich 6 anhand des Hauptsignals. In Figur 11 ist das dadurch erhaltene korrigierte Radarsignal 10 illustriert. Wie zu erkennen ist, weist das korrigierte Radarsignal 10 einen im Wesentlichen glatten Verlauf auch innerhalb des Störbereichs 6 auf.

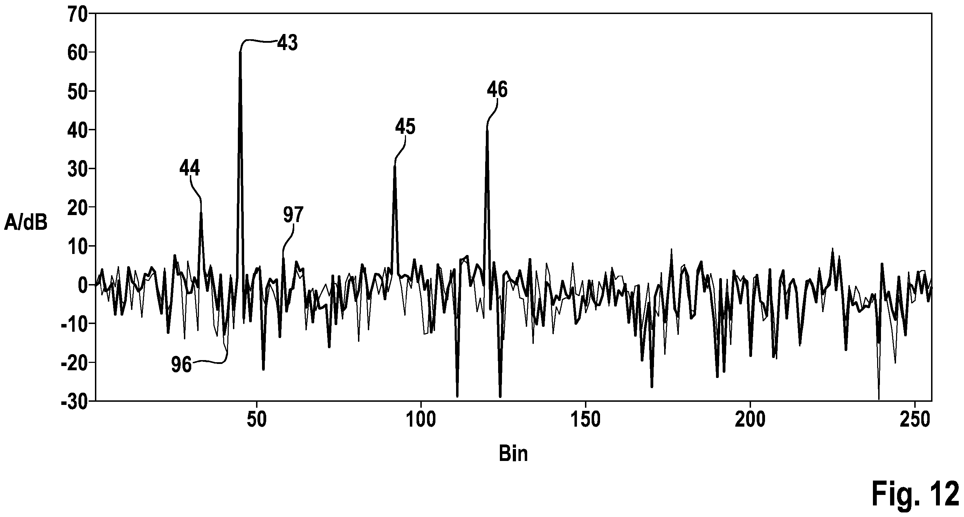

In Figur 12 sind das Spektrum 96 des korrigierten Radarsignals 10 und das Spektrum 97 des Radarsignals 3 ohne Interferenzen gezeigt. Erkennbar sind die Unterschiede sehr gering und insbesondere sind die Artefakte im Bereich um die Hauptpeaks 43 bis 46 herum verschwunden.

Die Detektion der Störbereiche 6 und die entsprechende Korrektur kann für jede FMCW-Rampe (Chirp) einzeln durchgeführt werden. Es ist jedoch auch möglich, die Hauptpeaks über mehrere Chirps hinweg im Spektrum zu detektieren. Mittels geeigneter statistischer Auswertung, etwa Mittelwertbildung, Bestimmung von Varianz und Median, kann eine robustere Schwellenwertbildung zum Erkennen der Hauptpeaks erzielt werden, insbesondere falls sich die Hauptpeaks zwischen einzelnen Chirps nur geringfügig voneinander unterscheiden.

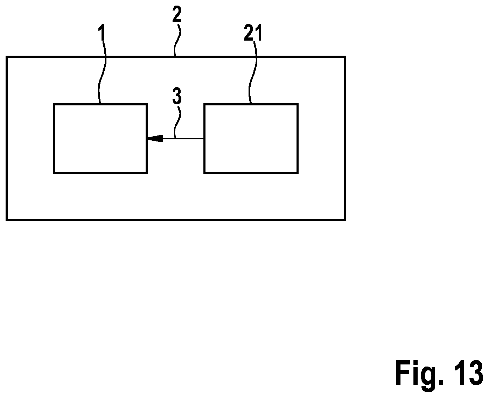

In Figur 13 ist ein Blockschaltbild einer Radarvorrichtung 2 gemäß einer Ausführungsform der Erfindung illustriert. Die Radarvorrichtung 2 weist eine Sendeempfängereinrichtung 21 auf, welche Radarwellen aussendet und die Reflexionen der ausgesendeten Radarwellen empfängt. Die Sendeempfängereinrichtung 21 erzeugt anhand der Radarwellen ein Radarsignal 3, welches an eine Vorrichtung 1 zum Korrigieren des ausgegebenen Radarsignals 3 übertragen wird. Die Vorrichtung 1 ist gemäß einer der oben beschriebenen Ausführungsformen ausgebildet.

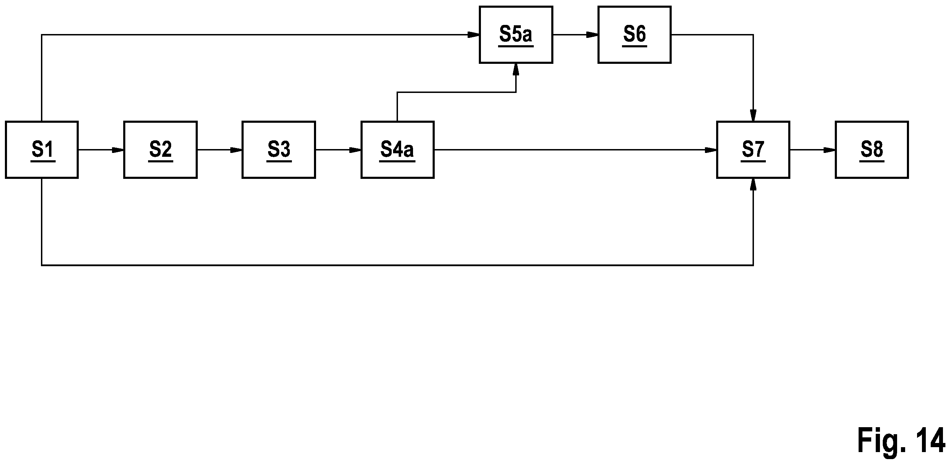

In Figur 14 ist ein Flussdiagramm eines beispielhaften Verfahrens zum Korrigieren eines Radarsignals 3 illustriert.

In einem Verfahrensschritt S1 wird das Radarsignal 3 erzeugt, indem Radarwellen mittels einer Radarvorrichtung 2 ausgesendet werden und die Reflexionen erfasst werden. Das Radarsignal 3 weist neben den Hauptpeaks, welche von Objekten im Umfeld der Radarvorrichtung 2 resultieren, zusätzliche Rauschbeiträge und Beiträge von Interferenzen auf. Die Interferenzbeiträge werden in den folgenden Schritten korrigiert.

Dazu wird das Radarsignal 3 in einem Verfahrensschritt S2 fouriertransformiert, um das Spektrum des Radarsignals 3 zu erhalten.

Im Schritt S3 werden die Hauptpeaks im Spektrum lokalisiert, etwa mittels eines CFAR-Algorithmus (constant false alarm rate).

Im Verfahrensschritt S4a erfolgt eine inverse Fouriertransformation der Anteile der Hauptpeaks im Spektrum, um ein Hauptsignal im Zeitbereich zu erzeugen.

Durch Subtrahieren des Hauptsignals vom Radarsignal 3 wird im Verfahrensschritt S5a ein Hilfssignal 5 erzeugt. Im Verfahrensschritt S6 werden Störbereiche 6 im Hilfssignal 5 erkannt, etwa anhand von Schwellenwerten.

Im Verfahrensschritt S7 wird ein korrigiertes Radarsignal erzeugt, indem das ursprüngliche Radarsignal 3 in den erkannten Störbereichen 6 mittels der entsprechenden Abschnitte des Hauptsignals korrigiert wird.

Das korrigierte Radarsignal wird im Verfahrensschritt S8 ausgegeben.

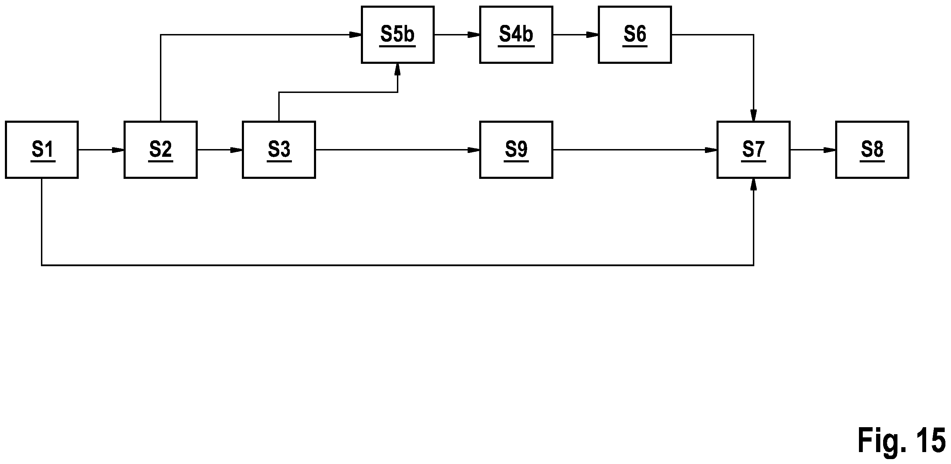

In Figur 15 ist ein Flussdiagramm eines Verfahrens zum Korrigieren eines Radarsignals 3 gemäß einer weiteren Ausführungsform illustriert. Im Unterschied zum in Figur 14 illustrierten Verfahren erfolgt die Subtraktion der Anteile der Hauptpeaks bereits im Frequenzbereich. Demnach werden im Schritt S5b die erkannten Peaks aus dem mittels Fouriertransformation erhaltenen Spektrum entfernt, um somit ein Differenzsignal zu erzeugen. Das Hilfssignal wird in einem nachfolgenden Schritt S4b durch inverse Fouriertransformation aus dem Differenzsignal berechnet. Vorteil dieser Ausführungsform ist, dass auch unterschiedliche Spektralanteile für die Erkennung der Störbereiche und für die Korrektur des Radarsignals 3 berücksichtigt werden können. Etwa können tiefe Spektralanteile zur Bestimmung der Störbereiche ausgeblendet werden.

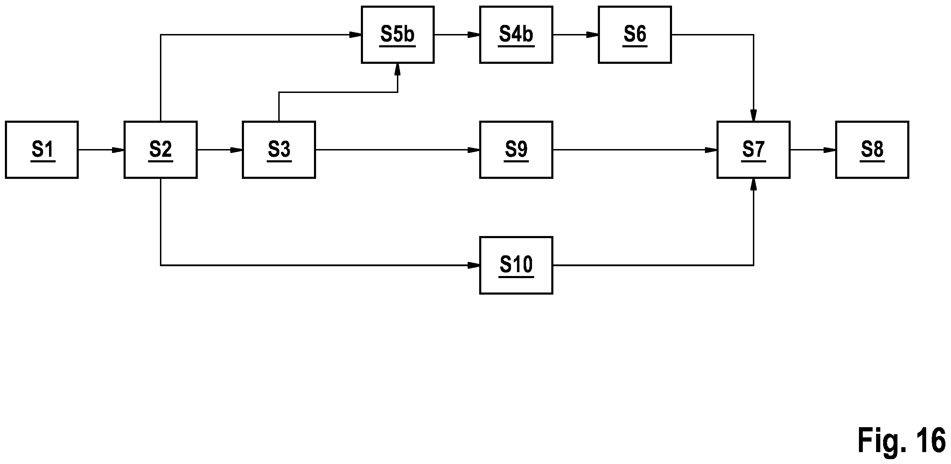

Ein weiteres Verfahren ist in dem Flussdiagramm in Figur 16 illustriert. Hierzu wird das Radarsignal 3 im Verfahrensschritt S2 fouriertransformiert. Das Radarsignal 3 wird anschließend nicht mehr benötigt und kann beispielsweise gelöscht werden. Die abschließende Korrektur im Schritt S7 erfolgt anhand des in einem Verfahrensschritt S10 mittels inverser Fouriertransformation aus dem Spektrum rückgewonnenen Radarsignals 3. Die restlichen Schritte verlaufen analog zu den beiden zuerst genannten Verfahren.

## Patentansprüche

1. Verfahren zum Korrigieren eines im Zeitbereich vorliegenden Radarsignals (3), mit den Schritten:
Ermitteln von Hauptpeaks (41 bis 46) im durch Fouriertransformation erhaltenen Spektrum des Radarsignals (3), wobei ein Peak im Spektrums des Radarsignals (3) als Hauptpeak erkannt wird, wenn die Amplitude der Peaks über einem vorgegebenen Schwellenwert liegt;
Ermitteln eines im Frequenzbereich vorliegenden Differenzsignals, indem die Anteile der Hauptpeaks (41 bis 46) im Spektrum des Radarsignals (3) auf Null gesetzt und dadurch entfernt werden,
Ermitteln eines im Zeitbereich vorliegenden Hilfssignals (5) durch inverse Fouriertransformation des im Frequenzbereich vorliegenden Differenzsignals,
Erkennen von Störbereichen (6) des im Zeitbereich vorliegenden Radarsignals (3) unter Verwendung des im Zeitbereich vorliegenden Hilfssignals (5), wobei ein Störbereich (6) erkannt wird, falls ein Absolutbetrag des Hilfssignals (5) oder eine Änderung einer Amplitude des Hilfssignals (5) einen vorgegebenen Schwellenwert überschreitet;
Erzeugen eines im Zeitbereich vorliegenden Hauptsignals durch inverse Fouriertransformation der Anteile der Hauptpeaks (41 bis 46) im Spektrum des Radarsignals (3), und
Erzeugen eines im Zeitbereich vorliegenden korrigierten Radarsignals (3) durch Interpolieren des im Zeitbereich vorliegenden Radarsignals (3) in den erkannten Störbereichen (6) des im Zeitbereich vorliegenden Radarsignals (3) mittels des im Zeitbereich vorliegenden Hauptsignals.

2. Verfahren nach Anspruch 1, wobei die Hauptpeaks (41 bis 46) mittels eines Peakdetektionsalgorithmus ermittelt werden.

3. Verfahren nach einem der Anspruch 1 oder 2, wobei ein Störbereich (6) als ein kleinster Zeitbereich ermittelt wird, innerhalb welchem sämtliche Zeitpunkte liegen, zu welchen eine Amplitude (A) des Hilfssignals (5) einen vorgegebenen Schwellenwert überschreitet.

4. Vorrichtung (1) zum Korrigieren eines im Zeitbereich vorliegenden Radarsignals (3), mit:
einer Schnittstelle (11), welche dazu ausgelegt ist, ein im Zeitbereich vorliegendes Radarsignal (3) zu empfangen;
einer Recheneinrichtung (12), welche mit der Schnittstelle (11) gekoppelt ist und dazu ausgebildet ist:
Hauptpeaks (41 bis 46) im durch Fouriertransformation erhaltenen Spektrum des Radarsignals (3) zu ermitteln, wobei ein Peak im Spektrums des Radarsignals (3) als Hauptpeak erkannt wird, wenn die Amplitude der Peaks über einem vorgegebenen Schwellenwert liegt;
ein im Frequenzbereich vorliegendes Differenzsignal zu ermitteln, indem die Anteile der Hauptpeaks (41 bis 46) im Spektrum des Radarsignals (3) auf Null gesetzt und dadurch entfernt werden,
ein im Zeitbereich vorliegendes Hilfssignal (5) durch inverse Fouriertransformation des im Frequenzbereich vorliegenden Differenzsignals zu ermitteln,
Störbereiche des im Zeitbereich vorliegenden Radarsignals (3) unter Verwendung des im Zeitbereich vorliegenden Hilfssignals (5) zu erkennen, wobei ein Störbereich (6) erkannt wird, falls ein Absolutbetrag des Hilfssignals (5) oder eine Änderung einer Amplitude des Hilfssignals (5) einen vorgegebenen Schwellenwert überschreitet;
durch inverse Fouriertransformation der Anteile der Hauptpeaks (41 bis 46) im Spektrum des Radarsignals (3) ein im Zeitbereich vorliegendes Hauptsignal zu erzeugen, und
ein im Zeitbereich vorliegendes korrigiertes Radarsignal (3) zu erzeugen, durch Interpolieren des im Zeitbereich vorliegenden Radarsignals (3) in den erkannten Störbereichen (6) des im Zeitbereich vorliegenden Radarsignals (3) mittels des im Zeitbereich vorliegenden Hauptsignals.

5. Radarvorrichtung (2), mit:
einer Sendeempfängereinrichtung (21), welche dazu ausgebildet ist, Radarwellen auszusenden, Reflexionen der Radarwellen zu empfangen und anhand der empfangenen Reflexionen ein Radarsignal (3) auszugeben; und
einer Vorrichtung (1) nach Anspruch 4 zum Korrigieren des ausgegebenen Radarsignals (3).

## Claims

1. Method for correcting a radar signal (3) present in the time domain, having the following steps:
determining main peaks (41 to 46) in the spectrum, as obtained by a Fourier transform, of the radar signal (3), wherein a peak in the spectrum of the radar signal (3) is recognized as a main peak when the amplitude of the peaks is above a predefined threshold value;
determining a differential signal present in the frequency domain by setting the components of the main peaks (41 to 46) in the spectrum of the radar signal (3) to zero and thereby removing them;
determining an auxiliary signal (5) present in the time domain through an inverse Fourier transform of the differential signal present in the frequency domain;
recognizing interference ranges (6) of the radar signal (3) present in the time domain using the auxiliary signal (5) present in the time domain, wherein an interference range (6) is recognized if an absolute value of the auxiliary signal (5) or a change in an amplitude of the auxiliary signal (5) exceeds a predefined threshold value;
generating a main signal present in the time domain through an inverse Fourier transform of the components of the main peaks (41 to 46) in the spectrum of the radar signal (3), and
generating a corrected radar signal (3) present in the time domain by interpolating the radar signal (3) present in the time domain in the recognized interference ranges (6) of the radar signal (3) present in the time domain using the main signal present in the time domain.

2. Method according to Claim 1, wherein the main peaks (41 to 46) are determined using a peak detection algorithm.

3. Method according to either of Claims 1 and 2, wherein an interference range (6) is determined in the form of a shortest time range containing all times at which an amplitude (A) of the auxiliary signal (5) exceeds a predefined threshold value.

4. Device (1) for correcting a radar signal (3) present in the time domain, having:
an interface (11) that is designed to receive a radar signal (3) present in the time domain;
a computing apparatus (12) that is coupled to the interface (11) and is designed:
to determine main peaks (41 to 46) in the spectrum, as obtained by a Fourier transform, of the radar signal (3), wherein a peak in the spectrum of the radar signal (3) is recognized as a main peak when the amplitude of the peaks is above a predefined threshold value;
to determine a differential signal present in the frequency domain by setting the components of the main peaks (41 to 46) in the spectrum of the radar signal (3) to zero and thereby removing them;
to determine an auxiliary signal (5) present in the time domain through an inverse Fourier transform of the differential signal present in the frequency domain;
to recognize interference ranges (6) of the radar signal (3) present in the time domain using the auxiliary signal (5) present in the time domain, wherein an interference range (6) is recognized if an absolute value of the auxiliary signal (5) or a change in an amplitude of the auxiliary signal (5) exceeds a predefined threshold value;
to generate a main signal present in the time domain through an inverse Fourier transform of the components of the main peaks (41 to 46) in the spectrum of the radar signal (3), and
to generate a corrected radar signal (3) present in the time domain by interpolating the radar signal (3) present in the time domain in the recognized interference ranges (6) of the radar signal (3) present in the time domain using the main signal present in the time domain.

5. Radar device (2), having:
a transceiver apparatus (21) that is designed to transmit radar waves, to receive reflections of the radar waves and to output a radar signal (3) based on the received reflections; and
a device (1) according to Claim 4 for correcting the output radar signal (3).

## Revendications

1. Procédé, destiné à corriger un signal radar (3) présent dans le domaine temporel, avec les étapes consistant à :
déterminer des pics principaux (41 à 46) dans le spectre du signal radar (3) obtenu par transformation de Fourier, un pic dans le spectre du signal radar (3) étant identifié en tant que pic principal si l'amplitude des pics dépasse une valeur seuil prédéfinie ;
déterminer un signal différentiel présent dans la gamme de fréquences, en plaçant à zéro les pics principaux (41 à 46) dans le spectre du signal radar (3) et en les éliminant de ce fait ;
déterminer un signal auxiliaire (5) présent dans le domaine temporel par transformation de Fourier inverse du signal différentiel présent dans la gamme de fréquences ;
identifier des zones de brouillage (6) du signal radar (3) présent dans le domaine temporel en utilisant le signal auxiliaire (5) présent dans le domaine temporel, une zone de brouillage (6) étant identifiée si un montant absolu du signal auxiliaire (5) ou une variation d'une amplitude du signal auxiliaire (5) dépasse une valeur seuil prédéfinie ;
générer un signal principal présent dans le domaine temporel par transformation de Fourier inverse des fractions des pics principaux (41 à 46) dans le spectre du signal radar (3), et
générer un signal radar (3) corrigé présent dans le domaine temporel par interpolation du signal radar (3) présent dans le domaine temporel dans les zones de brouillage (6) identifiées du signal radar (3) présent dans le domaine temporel du signal principal présent dans le domaine temporel.

2. Procédé selon la revendication 1, les pics principaux (41 à 46) étant déterminés au moyen d'un algorithme de détection des pics.

3. Procédé selon l'une quelconque des revendications 1 ou 2, une zone de brouillage (6) étant déterminée en tant que période la plus petite, au cours de laquelle se situent tous les moments auxquels une amplitude (A) du signal auxiliaire (5) dépasse une valeur seuil prédéfinie.

4. Dispositif (1) destiné à corriger un signal radar (3) présent dans le domaine temporel, comprenant :
une interface (11), laquelle est conçue pour réceptionner un signal radar (3) présent dans le domaine temporel ;
un dispositif de calcul (12), lequel est connecté avec l'interface (11) et conçu pour :
déterminer des pics principaux (41 à 46) dans le spectre du signal radar (3) obtenu par transformation de Fourier, un pic dans le spectre du signal radar (3) étant identifié en tant que pic principal si l'amplitude du pic dépasse une valeur seuil prédéfinie ;
déterminer un signal différentiel présent dans la gamme de fréquences en plaçant à zéro les pics principaux (41 à 46) dans le spectre du signal radar (3) et en les éliminant de ce fait ;
déterminer un signal auxiliaire (5) présent dans le domaine temporel par transformation de Fourier inverse du signal différentiel présent dans la gamme de fréquences ;
identifier des zones de brouillage du signal radar (3) présent dans le domaine temporel en utilisant le signal auxiliaire (5) présent dans le domaine temporel, une zone de brouillage (6) étant identifiée si un montant absolu du signal auxiliaire (5) ou une variation d'une amplitude du signal auxiliaire (5) dépasse une valeur seuil prédéfinie ;
générer un signal principal présent dans le domaine temporel par transformation de Fourier inverse des fractions des pics principaux (41 à 46) dans le spectre du signal radar (3), et
générer un signal radar (3) corrigé présent dans le domaine temporel par interpolation du signal radar (3) présent dans le domaine temporel dans les zones de brouillage (6) identifiées du signal radar (3) présent dans le domaine temporel du signal principal présent dans le domaine temporel.

5. Dispositif radar (2), comprenant :
un dispositif émetteur-récepteur (21), lequel est conçu pour émettre des ondes radar, réceptionner des réflexions des ondes radar et à l'aide des réflexions réceptionnées, délivrer un signal radar (3) ; et
un dispositif (1) selon la revendication 4, destiné à corriger le signal radar (3) délivré.
